(19) Europäisches Patentamt / European Patent Office / Office européen des brevets

(11) **EP 4 672 086 A1**

(12) **EUROPEAN PATENT APPLICATION**

(43) Date of publication:
**31.12.2025 Bulletin 2026/01**

(21) Application number: **24275073.5**

(22) Date of filing: **25.06.2024**

(51) International Patent Classification (IPC):
*G06N 3/04* *(2023.01)*

(52) Cooperative Patent Classification (CPC):
**G06N 3/04; G06N 3/063; G06N 3/082**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **ARINC Incorporated**
**Annapolis, MD 21401 (US)**

(72) Inventor: **Piyush, Yadav**
**Cork (IE)**

(74) Representative: **Dehns**
**10 Old Bailey**
**London EC4M 7NG (GB)**

(54) **MACHINE LEARNING MODELS**

(57) A computer implemented method of adapting a machine learning model for execution on a target device (102) is provided. The method comprises receiving information describing a trained machine learning model (501, 605, 701); determining a type of the machine learning model; receiving an indication (503, 607) of one or more characteristics of the target device; adapting the machine learning model for the target device using an adaptation method (306, 308) that is selected based on the type of the machine learning model; and outputting information (516, 622, 712) describing the adapted machine learning model.

Figure 1

## Description

Technical Field

The present disclosure relates to methods and systems for adapting machine learning models for execution on target devices.

Background

Aircraft and other aerospace systems often feature complex electrical systems, including potentially hundreds or thousands of electrical sensors that all gather data during operation. Microcontroller units (MCUs) are often used to collect, store and forward these data to central computing systems for analysis. For instance, MCUs may gather vast quantities of data from sensors as an aircraft operates, and then download this to a remote analysis system when the aircraft lands to gain insight into aircraft performance (e.g. to detect when preventative maintenance is needed on one or more parts of the aircraft). This analysis often utilises one or more machine learning models (also referred to as machine learning algorithms) such as neural networks to produce useful feedback and insights.

Gathering, processing and forwarding the large volumes of data involved to a remote or central processor for analysis can allow for the execution of sophisticated machine learning models with large memory, processing and power requirements. However, gathering and forwarding the data for remote processing can also require relatively large amounts of energy and communications infrastructure, and can result in long delays between the data being gathered and useful insights being produced. It has therefore been proposed to instead implement machine learning algorithms at or nearer to the devices that do the data collection. These devices are sometimes referred to as "edge" devices, and performing machine learning (ML) on these devices referred to as "edge ML" or "on-device ML". However, it is often impractical to implement sophisticated ML models on the basic hardware that is typically available on edge devices.

An improved approach may be desired.

Summary

According to a first aspect of the present disclosure there is provided a computer implemented method of adapting a machine learning model for execution on a target device, the method comprising:

     receiving information describing a trained machine learning model;
     determining a type of the machine learning model;
     receiving an indication of one or more characteristics of the target device;
     adapting the machine learning model for the target device using an adaptation method that is selected based on the type of the machine learning model; and
     outputting information describing the adapted machine learning model.

According to a second aspect of the present disclosure there is provided a system for adapting a machine learning model for execution on a target device, the system being arranged to:

     receive information describing a trained machine learning model;
     determine a type of the machine learning model;
     receive an indication of one or more characteristics of the target device;
     adapt the machine learning model for the target device using an adaptation method that is selected based on the type of the machine learning model; and
     output information describing the adapted machine learning model.

Thus, it will be recognised by those skilled in the art, that by using different adaptation methods for different types of machine learning model, the machine learning model may be more effectively optimised for different target devices.

In some examples, it may be beneficial for the adaptation process to maintain a performance level of the machine learning model (e.g. to maintain the same accuracy as the original model). It may also in some situations be acceptable for the model performance to decrease a little to enable better adaptation (e.g. to enable the model to be executed on less capable hardware). In a set of examples, the method comprises receiving an indication of one or more performance requirements for the machine learning model. Correspondingly, the system may be arranged to receive an indication of one or more performance requirements for the machine learning model. In some examples, adapting the machine learning model comprises ensuring that the adapted machine learning model meets the one or more performance requirements.

One example of a performance requirement may be a minimum relative accuracy level of one or more outputs of the adapted machine learning model compared to the original machine learning model (i.e. indicating how frequently and/or significantly an output of the adapted machine learning model is permitted to differ from a corresponding output of the original machine learning model when handling the same input(s)). For instance, a minimum relative accuracy level of 80% indicates that an output of the adapted machine learning model differs from a corresponding output of the original machine learning model less than 20% of the time and/or by less than 20%.

Another example of a performance requirement may be a minimum absolute accuracy level of one or more outputs of the adapted machine learning model (i.e. indicating how frequently and/or significantly an output of the adapted machine learning model is permitted to differ from a correct value).

In some examples, a minimum relative or absolute accuracy level may be at least 50%, at least 60%, at least 70%, at least 80% or at least 90%.

In a set of examples, additionally or alternatively, the machine learning model may be an artificial neural network (ANN) type of machine learning model. An ANN type of machine learning model comprises an artificial neural network made up of nodes (artificial neurons) which issue signals to and receive signals from connected nodes. An ANN may be described by a node structure (e.g. indicating the connections between nodes and the activation functions which are applied by the nodes to determine their output from their input(s)), and a set of node parameters (e.g. weights to be applied to signals input to a node and, optionally, biases applied to outputs of the nodes). The node parameters are typically tuned during a training procedure to cause the ANN to provide a desired function (e.g. to analyse or transform input data), with the node structure remaining fixed during training, although this is not necessarily always the case.

In a set of examples, if the machine learning model is determined to be of an artificial neural network type, the adaptation method that is used comprises (i.e. the method comprises selecting an adaptation method comprising):

determining a node structure of the artificial neural network;
determining a set of node parameters of the artificial neural network;
selecting one or more resources from a library of predetermined resources that corresponds to the node structure of the artificial neural network and is compatible with the one or more characteristics of the target device; and
mapping the set of node parameters of the artificial neural network onto the one or more resources from the library of predetermined resources to produce an adapted artificial neural network.

Creating the adapted ANN by mapping node parameters onto one or more predetermined resources may be quicker and/or more convenient than conventional processes for adapting an ANN for a target device. Moreover, the predetermined resources can be tested rigorously in advance, improving the reliability of the resulting adapted ML model. The use of predetermined resources may also make it easier to obtain regulatory approval for the finished adapted model.

The predetermined resources may comprise portions of source code. The resources may comprise node connection structures, activation functions and/or data converters. The library of predetermined resources may comprise resources corresponding to a plurality of different possible node structures. Additionally or alternatively, the library of predetermined resources may comprise resources compatible with a plurality of different target devices. The same library may therefore conveniently be used to adapt many different models for many different devices.

In some situations, it may not be possible to simply map an artificial neural network onto predetermined resources to produce an adapted ANN that is compatible with the target device. For instance, the complexity of the initial ANN may mean that, even when mapped onto compatible resources, the resulting ANN would exceed memory and/or processing constraints of the target device. In some situations, an ANN may include novel structures or functions that cannot feasibly be mapped onto the predetermined resources.

Therefore in a set of examples, the adaptation method comprises compressing the ANN (i.e. reducing the memory and/or processing power requirements for executing the ANN). The adaptation method may comprise compressing the ANN based on a detected memory or processing power constraint of the target device. Additionally or alternatively, the adaptation method may comprise compressing the ANN based on a performance requirement for the ANN. For instance, the adaptation method may comprise reducing a memory and/or processing power requirement for executing the ANN whilst maintaining a relative or absolute accuracy of the ANN output above a minimum level (e.g. 70% or 80%).

Compressing the ANN may comprise reducing a bitwidth of one or more of the node parameters (e.g. from 32 bits to 8 bits). This is referred to as quantizing. Additionally or alternatively, in some examples. Compressing the ANN comprises removing one or more nodes or layers from the ANN. This is referred to as pruning. Compressing the ANN may comprise performing one or more compression actions (e.g. quantizing and/or pruning) and then evaluating the quality of the resulting compressed ANN, e.g. to assess if the performance of the ANN is still acceptable. Evaluating the quality of the ANN may comprise inputting test data to the ANN and comparing the resulting output of the ANN to an expected output. This process may repeat one or more times. The compressing process may be iterative, alternating between compressing and evaluating, until a desired size of model is obtained or until the quality of the ANN drops to a minimum permissible level (e.g. indicated by a performance requirement).

In a set of examples where the machine learning model is determined to be of an artificial neural network type, the adaptation method comprises mapping the set of node parameters of the artificial neural network onto one or more resources from the library of predetermined resources and compressing the ANN. The compressing may be done before the mapping or vice versa.

However, for more complex ANNs (e.g. with large numbers of layers) it may be impractical to provide a library with predetermined resources that adequately correspond to all possible node structures. In a set of examples, the machine learning model may be a deep artificial neural network type of machine learning model. If the machine learning model is determined to be of a deep artificial neural network type, the adaptation method used may comprise compressing the machine learning model and converting the machine learning model into a format compatible with the target device (i.e. without mapping to predetermined resources).

An ANN machine learning model may be determined to be a deep ANN type model if it features more than a threshold number of nodes (e.g. more than ten nodes, more than 20 nodes, or more than 100 nodes), or more than a threshold number of node layers (e.g. more than three layers, more than ten layers, or more than twenty layers). In such examples, the machine learning model may be determined to be an (ordinary) artificial neural network type of machine learning model (e.g. adapted using the mapping method described above) if it features less than the threshold number of nodes or less than the threshold number of node layers.

In a set of examples, the machine learning model may be a classical machine learning (classical ML) type of machine learning model. Examples of classical ML models include but are not limited to linear models, support vector machine, decision trees, random forest and boosting.

In a set of examples, if the machine learning model is determined to be of a classical ML type, the adaptation method used comprises (i.e. the method comprises selecting an adaptation method comprising) translating the information describing a trained machine learning model into a format compatible with the target device. This translation process may comprise serialising the trained machine learning model (i.e. converting the trained ML model into a serialized format). The translation process may comprise identifying one or more machine learning functions in the serialised ML model. The translation process may comprise mapping the identified function(s) into a format compatible with the target device.

The information describing the trained machine learning model (i.e. the input to the adaptation method) may comprise source code and/or compiled machine code. Similarly, the information describing the adapted machine learning model may comprise compiled machine code or uncompiled source code that, when executed by the target device, implements the machine learning model. The information describing the adapted machine learning model may comprise source code written in C or micropython.

The indication of one or more characteristics of the target device may identify one or more hardware and/or software properties of the target device, such as available memory (e.g. SRAM), processing capabilities (e.g. clock speed), power use constraints, programming language compatibility. Additionally or alternatively, the indication may identify a make or model of the target device from which software and/hardware properties of the target device can be derived (e.g. with reference to a separate data source).

In one or more non-limiting examples the target device may comprise an embedded microcontroller. In one or more non-limiting examples the target device may comprise an ESP Eye, Arduino ESP 32, Raspberry Pi Pico or TI 3235SF. The target device may comprise a sensor device arranged to collect sensor data. For instance, in a set of non-limiting examples the target device comprises one or more of a temperature sensor, a pressure sensor, an accelerometer, a gyroscope, a microphone, a motion sensor or a camera.

In a set of examples, the target device is an aerospace peripheral device, e.g. an aerospace sensor device for sensing one or more physical properties on an aircraft or other aerospace system. It may be particularly useful to enable edge ML processing in aerospace applications where communication bandwidth to a central or remote processing device can be limited and where low latency decision making may be desirable.

The target device may be arranged to input sensor data it has collected to the machine learning model. The machine learning model may be arranged to process the sensor data and provide one or more outputs. The output(s) may be classification(s), such as gesture or fall detection from camera data or speech classification from microphone data. Additionally or alternatively, the output(s) may be predictions such as a useful life remaining estimation for a given component.

The present disclosure extends to computer software that, when executed by a computer causes said computer to perform a method disclosed herein. The computer may comprise a memory storing said software. The computer may comprise a processor arranged to execute said software. The invention also extends to a non-transitory computer readable medium storing said software.

Features of any aspect or example described herein may, wherever appropriate, be applied to any other aspect or example described herein. Where reference is made to different examples, it should be understood that these are not necessarily distinct but may overlap.

Detailed Description

One or more non-limiting examples will now be described, by way of example only, and with reference to the accompanying figures in which:

Figure 1 is a schematic diagram of an aircraft featuring a plurality of peripheral devices;
Figure 2 is a schematic diagram of a system according to an example of the present disclosure
Figure 3 is a schematic diagram illustrating a method according to an example of the present disclosure;
Figure 4 is a schematic diagram illustrating an artificial neural network;
Figure 5 is a schematic diagram illustrating part of a method according to an example of the present disclosure;
Figure 6 is a schematic diagram illustrating part of a method according to an example of the present disclosure; and
Figure 7 is a schematic diagram illustrating part of a method according to an example of the present disclosure.

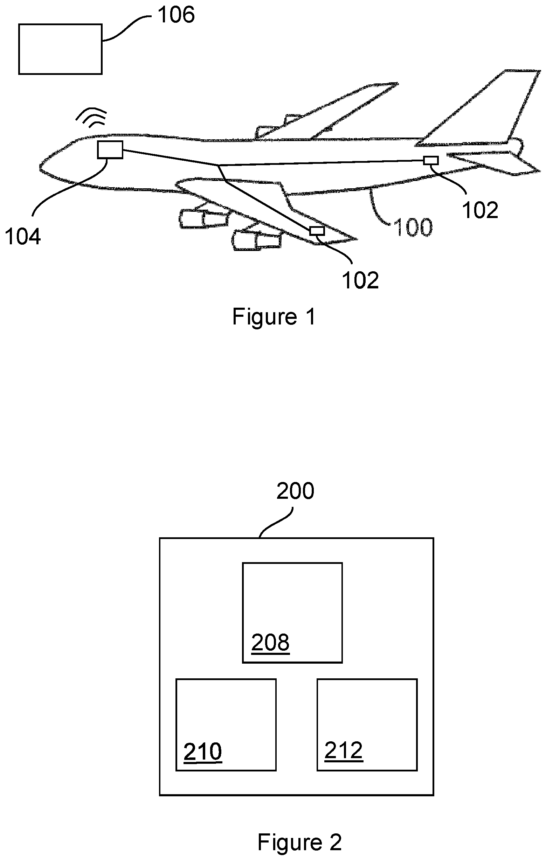

Figure 1 shows an aircraft 100 comprising a plurality of peripheral devices 102 and a central device 104 in communication with the plurality of peripheral devices 102. The central device 104 may also be operable to communicate with a remote system 106 (e.g. via satellite communication).

The peripherical devices 102 gather data as the aircraft 100 operates. For instance, one or more of the peripheral devices 102 may comprise a sensor such as a temperature sensor for gathering temperature data, an accelerometer for gathering movement data, a microphone for gathering sound data, a camera for gathering image data or a motion sensor for gathering motion data. Although only two peripheral devices 102 are illustrated, the aircraft 100 may in practice comprise a large number of peripheral devices 102 which (e.g. 100 or more) which collectively produce a very large quantity of data as the aircraft 100 operates.

The data gathered by the peripheral devices 102 may be usefully analysed to identify faults or to trigger preventative maintenance of aircraft parts. Additionally or alternatively, the data gathered by the peripheral devices 102 may also be analysed to control one or more parts of the aircraft. For instance, motion data may be analysed to identify user gestures for controlling a touch-free lavatory on the aircraft; sound data may be analysed to identify voice commands from a pilot and/or image data may be used to monitor a fill level of a beverage container or track the location of food items in a galley.

This analysis could be done by the central device 104 and/or the remote system 106, as these devices may comprise powerful processing capabilities and large memory resources. However, this would require the communication of all of the data gathered by the peripheral devices 102 to the central device 104 (and potentially on to the remote system 106), which would need significant communications infrastructure (e.g. satellite communication bandwidth) to be in place and introduce delays between the data being gathered and the analysis being performed.

Therefore, each of the peripheral devices 102 is configured to perform some analysis itself of the data it gathers. This is done by the peripheral devices 102 executing machine learning models (also referred to as machine learning algorithms). Machine learning models that may be employed include artificial neural networks of varying complexity, and classical machine learning algorithms such as linear models, support vector machine, decision trees, random forest, boosting.

Each device 102 may employ a different machine learning model and the models employed may be of different types and of varying complexity (e.g. based on the nature of the data being analysed and/or the desired outputs). Performing machine learning analysis on the peripheral devices 102 can aid the production of useful analysis results without needing large communication bandwidth or incurring significant latencies between the data gathering and analysis. This is sometimes referred to employing machine learning (ML) at the "edge", or "edge ML".

However, machine learning models such as neural networks are typically developed using highly capable hardware (e.g. with significant memory and processing capabilities). This hardware is often impractical to implement on the peripheral devices 102 due to size, weight, cost and/or power constraints. Therefore, it is useful to be able to adapt machine learning models for execution on the peripheral devices 102.

Figure 2 shows a computer system 200 for adapting a machine learning model for execution on a target device, such as a peripheral device 102. The computer system 200 comprises a memory 208, a processor 210 and an I/O interface 212.

The memory 208 stores software which, when executed on the processor 210, causes the processor 210 to perform the method for adapting a machine learning model that is described in more detail below. The I/O interface 212 enables the computer system 200 to communicate with other devices (e.g. a source of the ML model and the target device for which the model is adapted). The I/O interface 212 may be comprise a hardware interface and/or a software interface.

The computer system 200 may be arranged to output the adapted model directly to target device, or it may output the adapted model to an intermediate device or module (e.g. comprised by the central device 104 or the remote system 106).which in turn delivers the adapted machine learning model is delivered to the relevant target device

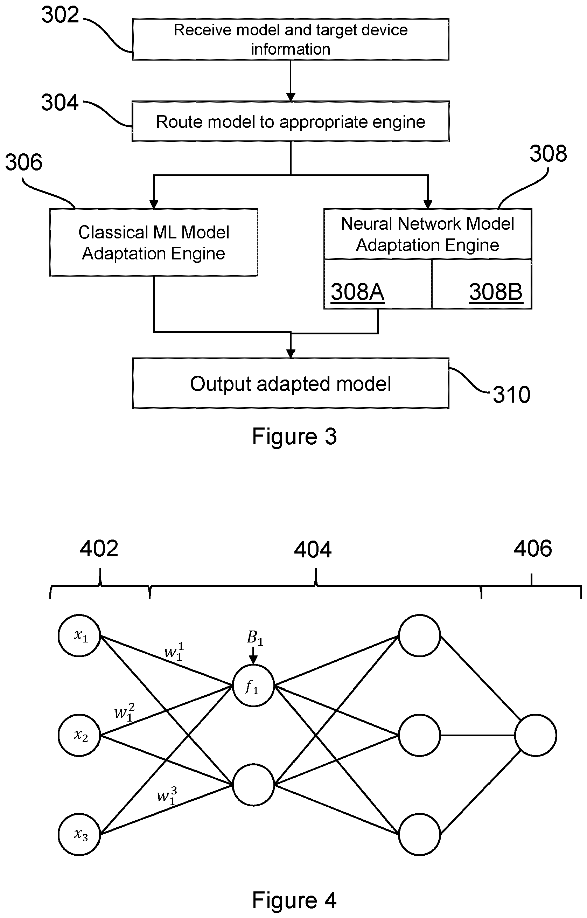

Figure 3 illustrates schematically the method of adapting a machine learning model for execution on a target device performed by the system 200.

In a first step 302, the computer system 200 receives information describing a trained machine learning model, along with information about the target device for which the model is to be adapted (e.g. available memory size and processing capabilities). The information describing the model may be, for instance, compiled machine code or uncompiled source code that, when executed by a suitable processing system, implements the machine learning model.

In a second step, the processor 210 analyses the received information and determines whether the machine learning model is a classical ML type machine learning model or a neural network type machine learning model. In other examples, other or more specific types of machine learning models may be recognised in this step.

The processor 210 utilises a different adaptation engine to adapt the machine learning model depending on what type it is. If the machine learning model is a classical ML type machine learning model, the processor 210 utilises a classical ML model adaptation engine 306. If the machine learning model is a neural network type machine learning model, the processor 210 utilises a neural network model adaptation engine 308. The neural network model adaptation engine 308 has two variants 308A, 308B. The first variant 308A is used for neural networks that are under a threshold complexity level and the second variant 308B is used for neural networks that are over the threshold complexity level. These engines will be described in more detail below.

Finally, once the appropriate adaptation method has been used to adapt the machine learning model for the target device, the computer system 200 outputs information describing the adapted machine learning model, for instance a compiled machine code or uncompiled source code that, when executed by the target device, implements the machine learning model.

Because different adaptation engines are used to adapt different types of machine learning model, the adaptations may be done more efficiently and effectively.

The neural network model adaptation engine 308 will now be described in more detail with additional reference to Figures 4, 5 and 6. Figure 4 shows, diagrammatically, a simple example of an artificial neural network (ANN) 400. The ANN 400 comprises a plurality of nodes arranged into an input layer 402, two intermediate layers 404 and an output layer 406. The example in Figure 4 has three inputs and one output but this is not essential and the number of input nodes, intermediate nodes (and layers) and output nodes may vary in other examples.

Each of the intermediate nodes and the output nodes has an associated activation function (e.g. $f_1$), which operates on the inputs to each node to produce an output. The activation function applies a weight to each input (e.g. $w_1^1, w_1^2, w_1^3$) and an overall bias (e.g. $B_1$). The activation functions may vary from node to node and may be linear or non-linear. The output of the ANN depends on the node connection structure, activation functions, weights and biases. The ANN may be trained using techniques known the art *per se* (e.g. back-propagation) to produce a desired output for given inputs.

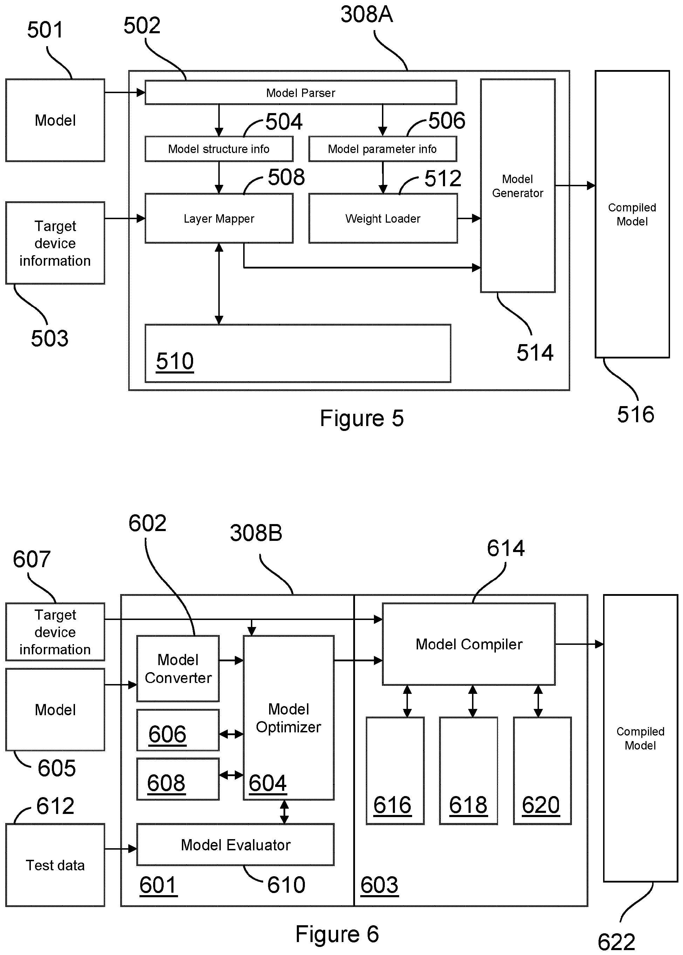

Figure 5 illustrates the first variant 308A of the neural network model adaptation engine 308 (i.e. a first adaptation method for adapting NN type machine learning models). The different parts of the neural network model adaptation engine 308A may be realised in hardware and/or software modules. This variant 308A is used for neural networks of relatively low complexity. For instance, the first variant 308A may be used for neural networks having a number of nodes or layers that is at or below a threshold value.

First, a model parser 502 receives and parses information describing the trained machine learning model 501 to determine the node structure 504 of the neural network (i.e. the number, connections and activation functions of the nodes), and node parameters 506 of the neural network (the weights and biases applied in each node).

Next, a layer mapper 508 receives the determined node structure 504 and information 503 about the target device (e.g. its memory and processing capabilities and/or programming language compatibility). The layer mapper 508 retrieves from a library 510 (e.g. stored in memory 208) appropriate sections of computer program code which provides the determined node structure 504 and are compatible with the target device.

The code sections stored in the library 510 are pre-tested for use in aerospace applications, which may help reliability and ease a regulatory approval process for the completed model. The library 510 may feature a selection of code sections which correspond to common node structures. The may, for instance, comprise a lightweight library written in C and/or Micropython.

Next, a model generator 514 takes the selected code sections from the layer mapper 508, and the determined node parameters 506 from a weight loader 512 and combines these to form a complete neural network model 514 that is adapted for target device. This model 516 is compiled and output to the target device.

Figure 6 illustrates the second variant 308B of the neural network model adaptation engine 308 (i.e. a second adaptation method for adapting NN type machine learning models). The different parts of the neural network model adaptation engine 308B may be realised in hardware and/or software modules. This method may be used for more complex neural networks, e.g. those with more than the threshold value of nodes or layers.

The engine 308B has two sections: an optimisation section 601, and a compilation section 603.

The first step in the optimisation section 601 is that a model converter 602 receives the information describing the trained machine learning model 605 and converts it into a common format (e.g. utilising different converter functions to convert models from different frameworks like Pytorch, Tensorflow, CoreML).

Next, a model optimiser 604 takes the model (in the common standard format) and information 607 about the target device and optimizes the model for the target device. The optimizer 604 considers the hardware requirements of the target device (e.g. memory, processor) and applies model compression techniques such as like quantization 606 and/or pruning 608. Quantization 606 can reduce the model size by storing weights in lower bitwidths (e.g. from FP32 to INT8). Pruning 608 can make the model sparser by removing nodes or layers of nodes from the artificial neural network.

The model optimiser 604 works iteratively with a model evaluator 610, to optimise the neural network whilst ensuring that it still provides desired performance. The evaluator 610 tests the performance of an optimised model using a test dataset 612 (e.g. stored in memory 208) and provides feedback to the model optimiser 604 which adjusts the optimised model accordingly. This iterative process continues until an optimal point of model compression and performance is reached.

The optimised neural network is then sent to the compilation section 603. A model compiler 614 converts the optimised model into machine code suitable for the target device. It utilises hardware toolchains 616, a model inference library 618 and code generator templates 620 (e.g. stored in memory 208). Finally, the compiled ANN model 622 is output to the target device.

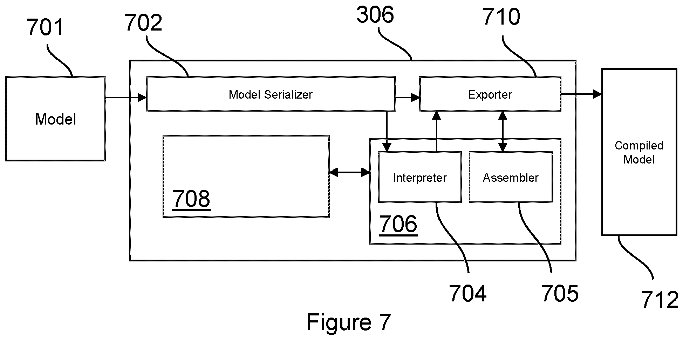

Figure 7 illustrates an example of the classical ML model adaptation engine 306 (i.e. an adaptation method for adapting classical ML type machine learning models). The different parts of the classical ML model adaptation engine 306 may be realised in hardware and/or software modules.

First, a model serializer 702 receives the information describing the trained machine learning model 701 and converts the described model into a serialized format (e.g. pickle).

The serialized model is then passed into an interpreter 704 and an assembler 705 of a code compilation engine 706. The interpreter 704 extracts and maps different ML functions from a code generation section 708. The code generation engine 708 stores code sections (e.g. stored in memory 208) which provide various different ML functions for different ML algorithm families (e.g. linear models, support vector machine, decision trees, random forest, boosting). There may be different interpreters for different ML algorithm families.

The assembler 705 structures the ML functions from the interpreter 704 into the necessary structure (e.g. a tree structure).

The outputs of the interpreter 704 and assembler 705 are then passed to an exporter 710 with programming language specific assembler info, before being exported as a compiled model 712 adapted for the target device.

While the disclosure has been described in detail in connection with only a limited number of examples, it should be readily understood that the disclosure is not limited to such disclosed examples. Rather, the disclosure can be modified to incorporate any number of variations, alterations, substitutions or equivalent arrangements not heretofore described, but which are commensurate with the scope of the disclosure. Additionally, while various examples of the disclosure have been described, it is to be understood that aspects of the disclosure may include only some of the described examples. Accordingly, the disclosure is not to be seen as limited by the foregoing description, but is only limited by the scope of the appended claims.

**Claims**

1. A computer implemented method of adapting a machine learning model for execution on a target device, the method comprising:

   receiving information describing a trained machine learning model;
   determining a type of the machine learning model;
   receiving an indication of one or more characteristics of the target device;
   adapting the machine learning model for the target device using an adaptation method that is selected based on the type of the machine learning model; and
   outputting information describing the adapted machine learning model.

2. The computer implemented method of claim 1, comprising receiving an indication of one or more performance requirements for the machine learning model, wherein adapting the machine learning model comprises ensuring that the adapted machine learning model meets the one or more performance requirements.

3. The computer implemented method of claim 1 or 2, comprising, if the machine learning model is determined to be of an artificial neural network type, selecting an adaptation method comprising:

   determining a node structure of the artificial neural network;
   determining a set of node parameters of the artificial neural network;
   selecting one or more resources from a library of predetermined resources that corresponds to the node structure of the artificial neural network and is compatible with the one or more characteristics of the target device; and
   mapping the set of node parameters of the artificial neural network onto the one or more resources from the library of predetermined resources to produce an adapted artificial neural network.

4. The computer implemented method of claim 3, wherein the library of predetermined resources comprises resources corresponding to a plurality of different possible node structures.

5. The computer implemented method of claim 3 or 4, wherein the adaptation method comprises compressing the ANN based on a detected memory or processing power constraint of the target device.

6.  The computer implemented method of any of claims 3-5, wherein the adaptation method comprises compressing the ANN based on a performance requirement for the ANN.

7.  The computer implemented method of claim 6, wherein compressing the ANN comprises reducing a bitwidth of one or more of the node parameters and/or removing one or more nodes or layers from the ANN.

8.  The computer implemented method of any preceding claim, if the machine learning model is determined to be of a deep artificial neural network type, selecting an adaptation method comprising:

    compressing the machine learning model; and
    converting the machine learning model into a format compatible with the target device.

9.  The computer implemented method of any preceding claim, if the machine learning model is determined to be of a classical machine learning type, selecting an adaptation method comprising:
    translating the information describing a trained machine learning model into a format compatible with the target device.

10. The computer implemented method of any preceding claim, wherein the indication of one or more characteristics of the target device identifies one or more hardware and/or software properties of the target device

11. The computer implemented method of any preceding claim, wherein the target device comprises an embedded microcontroller

12. The computer implemented method of any preceding claim, wherein the target device is an aerospace peripheral device

13. A system for adapting a machine learning model for execution on a target device, the system being arranged to:

    receive information describing a trained machine learning model;
    determine a type of the machine learning model;
    receive an indication of one or more characteristics of the target device;
    adapt the machine learning model for the target device using an adaptation method that is selected based on the type of the machine learning model; and
    output information describing the adapted ma-

chine learning model.

Figure 1

Figure 2

302 — Receive model and target device information

304 — Route model to appropriate engine

306

308

Classical ML Model Adaptation Engine

Neural Network Model Adaptation Engine

| 308A | 308B |

Output adapted model

310

Figure 3

402      404      406

$x_1$

$x_2$

$x_3$

$w_1^1$

$w_1^2$

$w_1^3$

$B_1$

$f_1$

Figure 4

**501**

Model

**502**

**308A**

Model Parser

**504** Model structure info

**506** Model parameter info

**Target device information**

**503**

**508** Layer Mapper

**512** Weight Loader

Model Generator

**510**

**514**

Compiled Model

**516**

Figure 5

**607**

Target device information

**602**

**308B**

**614**

Model Compiler

Model

**605**

Model Converter

**606**

**608**

Model Optimizer

**604**

**616**

**618**

**620**

**612**

Test data

Model Evaluator

**601**

**610**

**603**

Compiled Model

**622**

Figure 6

Figure 7

## EUROPEAN SEARCH REPORT

**Application Number**

EP 24 27 5073

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/161474 A1 (ZU CHUNSHAN [CN]) 16 May 2024 (2024-05-16) * paragraphs [0003] - [0188] * ----- | 1-13 | INV. G06N3/04 |
| A | US 2022/044114 A1 (SRIRAM PARTHASARATHY [US] ET AL) 10 February 2022 (2022-02-10) * paragraphs [0002] - [0459] * ----- | 1-13 | |
| A | CN 116 776 940 A (DUXIAOMAN TECH BEIJING CO LTD) 19 September 2023 (2023-09-19) * pages 2-13 * ----- | 1-13 | |
| A | JIANG ZHENGJIE ET AL: "Model Pruning and Deployment Optimization for Ship Detection", 2023 8TH INTERNATIONAL CONFERENCE ON INTELLIGENT COMPUTING AND SIGNAL PROCESSING (ICSP), IEEE, 21 April 2023 (2023-04-21), pages 1961-1968, XP034426272, DOI: 10.1109/ICSP58490.2023.10248433 [retrieved on 2023-09-20] * pages 2-10 * ----- | 1-13 | TECHNICAL FIELDS SEARCHED (IPC)  G06N |

The present search report has been drawn up for all claims

| Place of search | Date of completion of the search | Examiner |
|---|---|---|
| The Hague | 22 November 2024 | Moran, Matthew |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 27 5073

This annex lists the patent family members relating to the patent documents cited in the above-mentioned European search report.
The members are as contained in the European Patent Office EDP file on
The European Patent Office is in no way liable for these particulars which are merely given for the purpose of information.

22-11-2024

| Patent document cited in search report | | Publication date | Patent family member(s) | | Publication date |
|---|---|---|---|---|---|
| US 2024161474 | A1 | 16-05-2024 | CN 116702835 A | | 05-09-2023 |
| | | | US 2024161474 A1 | | 16-05-2024 |
| | | | WO 2023160290 A1 | | 31-08-2023 |
| US 2022044114 | A1 | 10-02-2022 | CN 114868135 A | | 05-08-2022 |
| | | | DE 112021001102 T5 | | 15-12-2022 |
| | | | US 2022044114 A1 | | 10-02-2022 |
| | | | WO 2022031764 A1 | | 10-02-2022 |
| CN 116776940 | A | 19-09-2023 | NONE | | |

EPO FORM P0459

For more details about this annex : see Official Journal of the European Patent Office, No. 12/82